# EUROPÄISCHE PATENTSCHRIFT

(11) **EP 0 843 789 B1**
(45) Veröffentlichungstag und Bekanntmachung des Hinweises auf die Patenterteilung: **12.07.2006**
(21) Anmeldenummer: 97923952.2
(22) Anmeldetag: 21.05.1997
(51) Int. Cl.: F16C 1/22

(54) **VORRICHTUNG ZUR LÄNGENKORREKTUR ODER -EINSTELLUNG VON SEILZÜGEN, BETÄTIGUNGSZÜGEN O.DGL.**
DEVICE FOR THE LONGITUDINAL CORRECTION OR SETTING OF CABLE PULLS, CORDS OR THE LIKE
DISPOSITIF DE CORRECTION OU D'AJUSTEMENT EN LONGUEUR DE CABLES DE TRANSMISSION, DE CABLES D'ACTIONNEMENT OU SIMILAIRES

(30) Priorität: 21.05.1996 DE 19620496
(43) Veröffentlichungstag der Anmeldung: 27.05.1998
(73) Patentinhaber: KÜSTER & Co. GmbH, 35630 Ehringshausen (DE)
(72) Erfinder: HENRICH, Willi, D-35630 Ehringshausen (DE)
(74) Vertreter: Müller, Eckhard
(86) Internationale Anmeldenummer: PCT/EP1997/002574
(87) Internationale Veröffentlichungsnummer: WO 1997/044593

(56) Entgegenhaltungen:
- EP-A- 0 224 399
- EP-A- 0 658 696
- WO-A-93/22571
- WO-A-94/10467
- DE-A- 3 738 441
- DE-U- 9 304 462
- FR-A- 2 611 832
- US-A- 4 936 161

## Beschreibung

Die Erfindung betrifft eine Vorrichtung zur Längenkorrektur oder -einstellung von Seilzügen, Betätigungszügen, mechanisch-flexiblen Fernbetätigungen o. dgl. mit einer Rastsegmenthülse, deren eine Verzahnung, insbesondere eine Innenverzahnung aufweisendes Rastsegment an einem flexiblen Arm angeordnet ist, mit einer mittels des Rastsegmentes in bzgl. einer Längsachse der Vorrichtung unterschiedlichen axialen Positionen verrastbaren, eine Gegenverzahnung, insbesondere eine Außenverzahnung aufweisenden Rasthülse und mit einer Sicherungshülse, die unter Wirkung einer zweiten Vorspannung in einer Verrastposition positionierbar ist, in welcher die Verzahnung des Rastsegments in Eingriff mit der Gegenverzahnung der Rasthülse steht.

Aus der WO 93/22571 ist bereits eine derartige Vorrichtung zur Längenkorrektur oder -einstellung von Betätigungszügen o. dgl. bekannt. Betätigungszüge für Kupplungen o. dgl. Vorrichtungen an Kraftfahrzeugen werden in aller Regel von der Zulieferindustrie an den Kraftfahrzeughersteller angeliefert und sollten so voreingestellt sein, daß bei der Montage im Werk des Kraftfahrzeugherstellers ein Minimum an Aufwand entsteht. Hierzu werden die Betätigungszüge, die gewöhnlich ein Drahtseil und einen das Drahtseil umgebenden Schlauch aufweisen, mit einer derartigen Vorrichtung zur Längenkorrektur oder - einstellung ausgestattet, so daß bspw. die Länge des Schlauches verändert werden kann. Die Anlieferung erfolgt mit der kürzesten einstellbaren Schlauchlänge, damit die Drahtseilenden leicht an den entsprechenden Gebern und Nehmern des Kraftfahrzeuges eingehängt werden können.

Aus der EP 0 312 382 A2 ist ebenfalls eine Vorrichtung zur Längenkorrektur oder -einstellung von Seilzügen bekannt, bei der Rastsegmente mit der Außenverzahnung eines Stabes zusammenwirken. Die Rastsegmente sind in einem Endbereich eines Gehäuses frei verschiebbar angeordnet und werden von einer Ringfeder, die alle Rastsegmente ringförmig umgreift, zusammengehalten. Des weiteren ist in dem Endbereich des Gehäuses eine topfförmig ausgebildete Scheibe angeordnet, die in einem Ringbereich Schrägflächen aufweist. Diese Schrägflächen können mit an den Rastsegmenten angeordneten Schrägflächen zum Überführen der Rastsegmente in eine Öffnungsstellung zusammenwirken. Die Schließstellung der Rastsegmente wird dadurch herbeigeführt, daß diese über einen Teilumfangsbereich eine konische Außenfläche aufweisen, die mit einer entsprechenden konischen Innenfläche des Endbereichs des Gehäuses zusammenwirkt und die Rastsegmente in eine Schließstellung überführt.

Aus der EP 0 224 399 A1 ist eine weitere Vorrichtung zur Längenkorrektur oder -einstellung von Seilzügen, Betätigungszügen, mechanisch-flexiblen Fernbetätigungen oder dergleichen bekannt, die eine Rastsegmenthülse aufweist, deren eine Innenverzahnung aufweisenden Rastsegmente radial beweglich in Öffnungen angeordnet sind. Eine Rasthülse mit Außenverzahnung ist mittels der Rastsegmente in bzgl. einer Längsachse der Vorrichtung unterschiedlichen axialen Positionen verrastbar. Weiterhin ist eine Sicherungshülse vorgesehen, die unter Wirkung einer Vorspannung in einer Verrastposition positionierbar ist, in welcher die Verzahnung der Rastsegmente in Eingriff mit der Außenverzahnung der Rasthülse stehen. Die Rastsegmente weisen stegartige Querfortsätze auf. An der Sicherungshülse ist als Führungsmittel ein Schlitz mit Rampen für die Fortsätze vorgesehen. Eine Überführung der Sicherungshülse aus der Verrastposition in eine Endrastposition wird somit in eine geführte Bewegung der Fortsätze und der Rastsegmente umgesetzt, wobei die Innenverzahnung außer Eingriff mit der Außenverzahnung gelangt.

Diese bekannte Vorrichtung umfaßt eine Mehrzahl von Bauteilen und ist daher recht aufwendig aufgebaut und umständlich zu montieren.

Obwohl sich die bekannten Vorrichtungen in der Praxis durchaus bewährt haben, besteht ein Bedarf zur Weiterbildung der bekannten Vorrichtung dahingehend, daß nur ein geringer Teileaufwand für die Vorrichtung erforderlich ist, die Teile der Vorrichtung einfach montierbar sind und die Vorrichtung leichtgängig betätigbar ist.

Diese Aufgabe wird nach der Erfindung in Weiterbildung der Vorrichtung mit den eingangs genannten Merkmalen dadurch gelöst, daß das freie Ende des Arms als Fortsatz ausgebildet ist und an der Sicherungshülse Führungsmittel für den Fortsatz angeordnet sind, der Fortsatz spitzwinklig schräg nach außen geneigt ist und die Randabschnitte der Führungsmittel der Sicherungshülse, insbesondere an der Innenwand und/oder Außenwand eine entsprechende angepaßte Schräge oder Neigung aufweisen, wobei eine Überführung der Sicherungshülse aus der Verrastposition in eine Entrastposition in eine geführte Bewegung des Fortsatzes und des Arms umgesetzt wird und die Verzahnung außer Eingriff mit der Gegenverzahnung gelangt.

Die erfindungsgemäße Vorrichtung weist somit neben den die Vorspannung erzeugenden Elementen lediglich drei Bauteile, nämlich die Rastsegmenthülse, die Rasthülse und die Sicherungshülse auf, wobei aufgrund der an der Sicherungshülse für die Arme vorgesehenen Führungsmittel ohne weitere Hilfsmitteln, wie Federn o. dgl., ein Entrasten der Rasthülse bei einer Überführung der Sicherungshülse in die Entrastposition gewährleistet ist. Aufgrund dieser Zwangsführung der Arme in oder an der Sicherungshülse wird insgesamt unter Einsparung von Bauteilen eine sichere Funktion der Vorrichtung gewährleistet. Darüber hinaus läßt sich die Vorrichtung äußerst einfach montieren und ggf. auch demontieren.

Um eine möglichst leichtgängige und widerstandsfreie Bewegung der Fortsätze in den Führungsmitteln der Sicherungshülse zu bewerkstelligen, sind die Fortsätze spitzwinklig schräg nach außen geneigt, wobei die Randabschnitte der Durchbrechungen der Sicherungshülse an der Innenwand und/oder Außenwand eine entsprechende angepaßte Schräge oder Neigung besitzen.

Nach einer ersten vorteilhaften Ausführungsform der Erfindung sind die Führungsmittel als Durchbrechung der Sicherungshülse ausgebildet, wobei der Fortsatz in der Durchbrechung der Sicherungshülse geführt ist. Aufgrund dieser Maßnahmen ist auf konstruktiv einfache Weise eine Zwangsbewegung der Arme bei einer Betätigung der Sicherungshülse gewährleistet.

Dabei hat es sich als vorteilhaft erwiesen, daß die Führungsmittel derart angeordnet und ausgestaltet sind, daß eine axiale Verschiebung der Sicherungshülse mittels der Führungsmittel in eine radial ein- oder auswärts gerichtete Auslenkung der Arme umgesetzt wird.

Eine weitere Ausführungsform der Erfindung besteht darin, daß die Rasthülse an dem rückwärtigen Ende einen radial nach außen weisenden Ringbund, Ringflansch o. dgl. Anschlag aufweist. Dieser Anschlag ist derart bemessen, daß die Rasthülse zum Zwecke der Montage bei extrem weit nach außen gespreizten Armen der Rastsegmenthülse in diese eingeführt werden kann, in der montierten Stellung jedoch bei normal gespreizten Armen der in der Entrastposition befindlichen Sicherungshülse nicht ohne weiteres aus dieser heraustreten kann, da der Anschlag gegen die Rastsegmente anschlägt und ein weiteres Austreten der Rasthülse verhindert.

Dabei hat es sich als vorteilhaft erwiesen, daß die Rastsegmenthülse in einem rückwärtigen Abschnitt einen äußeren Anschlag, wie einen Absatz, eine umlaufende Stufe, Ringwand o. dgl. aufweist, der als Begrenzung des Verschiebeweges der Sicherungshülse auf der Rastsegmenthülse dient.

Nach einer weiteren vorteilhaften Ausführungsform der Erfindung weist die Rasthülse an dem rückwärtigen Ende eine Aufnahme o. dgl. auf, in der eine erste Druckfeder zur Erzeugung der ersten Vorspannung wenigstens teilweise aufgenommen ist, wobei die Aufnahme einen Ringabsatz o. dgl. Stufe besitzt, an dem oder der die erste Druckfeder sich einends abstützt. Durch diese Maßnahme wird insbesondere die Montage erleichtert, da die Rasthülse mit der in der Aufnahme aufgenommenen Druckfeder einfach in die Rastsegmenthülse, deren Arme weit nach außen abgespreizt sind, eingeführt werden kann.

In konstruktiv besonders einfacher Ausgestaltung besitzt die Rastsegmenthülse in dem rückwärtigen Abschnitt ein Boden mit einer i. w. zentrisch angeordneten Durchbrechung, an dem sich die erste Druckfeder anderenends zur Erzeugung der ersten Vorspannung abstützt. Die Durchbrechung dient dabei der Durchführung des Drahtseils des Betätigungszuges, während sich der Schlauch des Betätigungszuges an entsprechenden Aufnahmen der einander abgewandten Enden der Rasthülse sowie Rastsegmenthülse abstützt.

Weiterhin ist nach einer anderen vorteilhaften Weiterbildung der Erfindung vorgesehen, daß die Rastsegmenthülse im Bereich des Ansatzes der Arme eine äußere Ringstufe o. dgl. aufweist, an der sich eine zweite Druckfeder für die zweite Vorspannung einends abstützt.

Die Sicherungshülse weist im rückwärtigen Bereich eine topfförmige Aufnahme mit einer inneren Ringstufe o. dgl. auf, an der sich die zweite Druckfeder anderenends abstützt. Dabei ist die zweite Druckfeder im montierten Zustand der Vorrichtung praktisch vollständig in jeder Positionierung der Sicherungshülse in der Aufnahme aufgenommen, so daß eine Verletzungsgefahr bei der Betätigung der Sicherungshülse ausgeschlossen ist.

Obwohl sich die Verwendung von insbesondere zwei, einander i. w. diametral gegenüberliegenden Armen an der Rastsegmenthülse als vorteilhaft erwiesen hat, besteht natürlich auch die Möglichkeit mehrere, i. w. in Umfangsrichtung gleich verteilte Arme einzusetzen. Des weiteren ist es auch denkbar, lediglich einen flexiblen Arm an der Rastsegmenthülse vorzusehen, wobei dann unter Umständen ein oder mehrere feste Widerlager, die ggf. eine Gegenverzahnung aufweisen können, an der Rastsegmenthülse vorgesehen sein können.

Die Montage der Vorrichtung ist äußerst einfach, wobei zunächst die Arme der Rastsegmenthülse zusammengedrückt werden, so daß die zweite Druckfeder auf die Rastsegmenthülse gesteckt werden kann. Anschließend weichen die Arme aufgrund der Eigenelastizität wieder auseinander, so daß die zweite Druckfeder auf der Rastsegmenthülse gehalten ist. In einem nächsten Schritt werden die Arme der Rastsegmenthülse von hinten in die topfförmige Aufnahme der Sicherungshülse eingeführt und während des Einführens leicht zusammengedrückt, so daß die Arme an der Ringstufe der Aufnahme in Richtung der Längsachse weiter in die Sicherungshülse eingeführt werden können. Anschließend wird der Druck auf die Arme gelöst und die Rastsegmenthülse weiter in die Sicherungshülse hineingeschoben, wobei die Fortsätze der Arme in die Durchbrechungen der Sicherungshülse eintauchen und durch diese hindurchtreten, so daß die Innenflächen der Enden der Fortsätze auf den abgeschrägten Bereichen der Außenwand der Sicherungshülse aufliegen. Nun wird die Sicherungshülse gegen die Federkraft der zweiten Druckfeder in eine extreme Entraststellung verschoben, wobei die Arme aufgrund der Führungsmittel zwangsweise extrem nach außen geschwenkt werden, so daß die Rasthülse mit der in der Aufnahme aufgenommenen ersten Druckfeder mit dem Anschlag zwischen den Rastsegmenten hindurch in die Rastsegmenthülse hineingesteckt werden kann.

Im weiteren wird nun der Betätigungszug mit der Vorrichtung verbunden, indem das Drahtseil durch die Durchbrechung im Boden der Rastsegmenthülse und durch die Längsbohrung der Rasthülse hindurchgeführt wird, während die Schlauchenden des Drahtseils in entsprechenden einander abgewandten endseitigen Aufnahme der Rastsegmenthülse sowie der Rasthülse fixiert werden.

Zur Ersteinstellung der Vorrichtung im Anlieferzustand wird die Rasthülse unter Überführung der Sicherungshülse in die Entrastposition so tief wie möglich in die Rastsegmenthülse hineingedrückt und mittels der anschließend in die Verrastposition überführten Sicherungshülse in dieser Position verrastet. Der Schlauch des Betätigungszuges weist bei dieser Ersteinstellung der Vorrichtung die kürzest mögliche Länge auf, so daß die Enden des Drahtseils aus dem Schlauch soweit wie möglich hervorstehen und beim Kraftfahrzeughersteller einfach und schnell an dem Nehmer bzw. Geber befestigt werden können. Nach Befestigen der Enden des Drahtseils wird die Sicherungshülse in die Entrastposition überführt, so daß die Rasthülse unter Wirkung der Kraft der ersten Druckfeder aus der Rastsegmenthülse heraustreten kann und die Lose in dem Systemgeber, Betätigungszug und Nehmer beseitigt ist. Die Sicherungshülse wird unter der Wirkung der zweiten Druckfederkraft selbsttätig in die Verrastposition überführt. Diese Maßnahmen können auch zur Nachstellung des Systems, bspw. bei Verschleiß o. dgl., beliebig oft wiederholt werden, indem lediglich die Sicherungshülse aus der Verrastposition in die Entrastposition gegen die Wirkung der zweiten Federkraft überführt und anschließend wieder freigegeben wird.

Mittels der erfindungsgemäßen Vorrichtung läßt sich nicht nur eine Einstellung des Außenschlauches eines Betätigungszuges realisieren, sondern in gleicher Weise auch eine Veränderung der Innenzuglänge.

Gemäß einer anderen, besonders vorteilhaften Ausgestaltung der Erfindung ist die Sicherungshülse in der Entrastposition lösbar an der Vorrichtung, insbesondere der Rastsegmenthülse, festlegbar oder verrastbar, wobei hierzu Rast- und/oder Gegenrastmittel vorgesehen sind. Aufgrund dieser Maßnahme ist es nicht erforderlich, bei einer Ersteinstellung der Vorrichtung die Sicherungshülse gegen die Wirkung der unter Umständen starken Federkraft in der Entrastposition manuell zu halten, so daß diese mittels der Rast- und/oder Gegenrastmittel lösbar festlegbar ist. Ist die Ersteinstellung oder Einstellung zur Beseitigung der Lose in dem System vorgenommen, kann die Sicherungshülse einfach aus dieser Rast- oder Verriegelungsposition gelöst werden, so daß die Verzahnung der Rastsegmente in Eingriff mit der Gegenverzahnung der Rasthülse gelangt und die Vorrichtung insgesamt verrastet ist.

Es bietet sich weiterhin an, daß die Rastsegmenthülse ein oder mehrere Rastmittel, wie Nasen, Vorsprünge, Widerlager o. dgl. aufweist, an der oder denen sich die Sicherungshülse in der Entrastposition abstützt.

Dabei hat es sich als vorteilhaft erwiesen, daß die Sicherungshülse mit den Rastmitteln der Rastsegmenthülse korrespondierende Gegenrastmittel, insbesondere Nasen o. dgl., aufweist, wobei die Rastmittel und die Gegenrastmittel der in der Entrastposition positionierten Sicherungshülse einander hintergreifen.

Um ein einfaches Entrasten bzw. Lösen der Sicherungshülse in der Entrastposition zu bewerkstelligen, ist es von Vorteil, daß bspw. die Gegenrastmittel einer elastisch verformbaren Ringwand der Sicherungshülse angeformt sind. Durch einfaches Ausüben einer Kraft auf die Ringwand kann diese verformt werden, so daß die Gegenrastmittel außer Eingriff mit den Rastmitteln gelangen und die Sicherungshülse aufgrund der Wirkung der Federkraft von der Entrastposition in die Verrastposition überführbar ist.

Vorteilhafterweise sind die Gegenrastmittel Bestandteil eines Ringsteges, der mittels insbesondere zweier Längsstege einstückig mit der Sicherungshülse verbunden ist.

Des weiteren hat es sich als vorteilhaft erwiesen, daß der Rastsegmenthülse einends eine Öse o. dgl. angeformt ist, die insbesondere zur Aufnahme einer Kugelpfanne dient, wobei in der Kugelpfanne ein Betätigungszug oder ggf. ein Gestänge o. dgl. fixiert werden kann.

Weitere Vorteile und Anwendungsmöglichkeiten der vorliegenden Erfindung ergeben sich aus der nachfolgenden Beschreibung der Ausführungsbeispiele anhand der Zeichnungen.

Es zeigen:
- Figur 1: eine Seitenansicht eines Ausführungsbeispiels der Erfindung, teilweise geschnitten,
- Figur 2: in Schnittdarstellung den Montageschritt von Rastsegmenthülse und Sicherungshülse und
- Figur 3: in Schnittdarstellung den Montageschritt der Rasthülse in der Rastsegmenthülse,
- Figur 4: in Schnittdarstellung die Ersteinstellung der Vorrichtung mit der Sicherungshülse in Entraststellung,
- Figur 5: in Schnittdarstellung die Ersteinstellung der Vorrichtung mit der Sicherungshülse in der Verraststellung und
- Figuren 6a, b: eine Draufsicht, teilweise geschnitten, sowie eine Seitenansicht eines weiteren Ausführungsbeispiels der Erfindung, bei dem die Sicherungshülse in der Entrastposition lösbar an der Rastsegmenthülse festlegbar ist.

Ein Ausführungsbeispiel der Vorrichtung 10 zur Längenkorrektur oder -einstellung von Seilzügen, Betätigungszügen, mechanisch-flexiblen Fernbetätigungen o. dgl. ist in den Figuren dargestellt. Die Vorrichtung 10 weist eine Rastsegmenthülse 12 auf, deren eine Innenverzahnung 16 aufweisenden Rastsegmente 14 an flexiblen Armen 18 angeordnet sind. In der Rastsegmenthülse 12 ist eine Rasthülse 24 aufgenommen, die eine Außenverzahnung 22 aufweist. Mittels der Rastsegmente 14 ist die Rasthülse 24 in bzgl. der Längsachse 20 der Vorrichtung 10 unterschiedlichen axialen Positionen verrastbar. Dabei stehen die Rastsegmenthülse 20 und die Rasthülse 24 unter der Wirkung einer beide Hülse 12, 24 auseinander treibenden Vorspannung, die durch eine erste Druckfeder 48 erzeugt wird.

Desweiteren ist eine Sicherungshülse 26 vorgesehen, die unter der Wirkung der Vorspannung einer zweiten Druckfeder 60 in einer Verrastposition positionierbar ist, in welcher die Innenverzahnung 16 der Rastsegmente 14 in Eingriff mit der Außenverzahnung 22 der Rasthülse 21 steht. An der Sicherungshülse 26 sind Führungsmittel 28 für die Arme 18 angeordnet, wobei eine Überführung der Sicherungshülse 26 aus der Verrastposition in eine Entrastposition in eine geführte Bewegung der Arme 18 umgesetzt wird, so daß die Innenverzahnung 16 außer Eingriff mit der Außenverzahnung 22 gelangt und die Rasthülse 24 unter der Wirkung der ersten Druckfeder 48 aus der Rastsegmenthülse 12 herausgedrückt wird. Aus der Entrastposition wird die Sicherungshülse 26 unter der Wirkung der zweiten Druckfeder 60 selbsttätig zurück in die Verrastposition überführt, wobei die Arme 18 unter der Wirkung der Führungsmittel 28 derart zurückbewegt werden, daß die Innenverzahnung 16 wieder in Eingriff mit der Außenverzahnung 22 kommt.

Die Führungsmittel 28 sind durch Durchbrechungen 32 der Sicherungshülse 26 gebildet, wobei in die Durchbrechungen 32 als Fortsätze 30 ausgebildete freien Enden der Arme 18 eintauchen. Dabei sind die Fortsätze 30 spitzwinklig schräg nach außen geneigt ausgebildet und weisen die Randabschnitte der Durchbrechungen 32 der Sicherungshülse 26 an der Innenwand bzw. Außenwand eine entsprechend angepaßte Schräge 34 oder Neigung 36 auf. Mit Hilfe der solchermaßen ausgestalteten Führungsmittel 28 wird eine axiale Verschiebung der Sicherungshülse 26 in eine radial ein- oder auswärts gerichtete Auslenkung der Arme 18 umgesetzt. Es ist auch denkbar, daß die Führungsmittel 28 durch entsprechende, in radialer Richtung an der Sicherungshülse 26 angeordnete Auflaufschrägen für die Fortsätze 30 ein Ein- oder Auswärtsschwenken der Arme 18 aufgrund einer Verdrehung der Sicherungshülse 26 in radialer Richtung zulassen.

Die Rasthülse 24 weist an dem rückwärtigen Ende 38 einen radial nach außen weisenden Anschlag 40 auf, der als Ringbund, Ringflansch o. dgl. ausgebildet ist. Dieser Anschlag 40 sorgt dafür, daß die Rasthülse 24 nicht unbeabsichtigt gänzlich aus der Rastsegmenthülse 12 austreten kann, wenn die Sicherungshülse 26 in der normalen Entraststellung positioniert ist. Die Rastsegmenthülse 12 ist in einem rückwärtigen Abschnitt 42 mit einem äußeren Anschlag 44, wie einem Absatz, einer umlaufenden Stufe oder Ringwand versehen, welche den axialen Verschiebeweg der Sicherungshülse 26 in Richtung der Entraststellung begrenzt. Die Rasthülse 24 besitzt an dem rückwärtigen Ende 38 eine Aufnahme 46 o. dgl., in der die erste Druckfeder 48 wenigstens teilweise aufgenommen ist. Die Aufnahme 38 ist mit einem Ringabsatz 50 o. dgl. versehen, an dem die erste Druckfeder 48 sich einends abstützt. Die Rastsegmenthülse 14 weist in einem rückwärtigen Abschnitt 42 einen Boden 52 mit einer i. w. zentrisch angeordneten Durchbrechung 54 auf, an dem sich die erste Druckfeder 48 anderenends abstützt.

Die Rastsegmenthülse 12 ist im Bereich des Ansatzes 56 der Arme 18 mit einer äußeren Ringstufe 58 o. dgl. versehen, an der sich die zweite Druckfeder 60 zur Erzeugung der zweiten Druckspannung einends abstützt. Weiterhin weist die Sicherungshülse 26 im rückwärtigen Bereich eine topfförmige Aufnahme 62 mit einer inneren Ringstufe 64 o. dgl. auf, an der sich die zweite Druckfeder 60 anderenends abstützt.

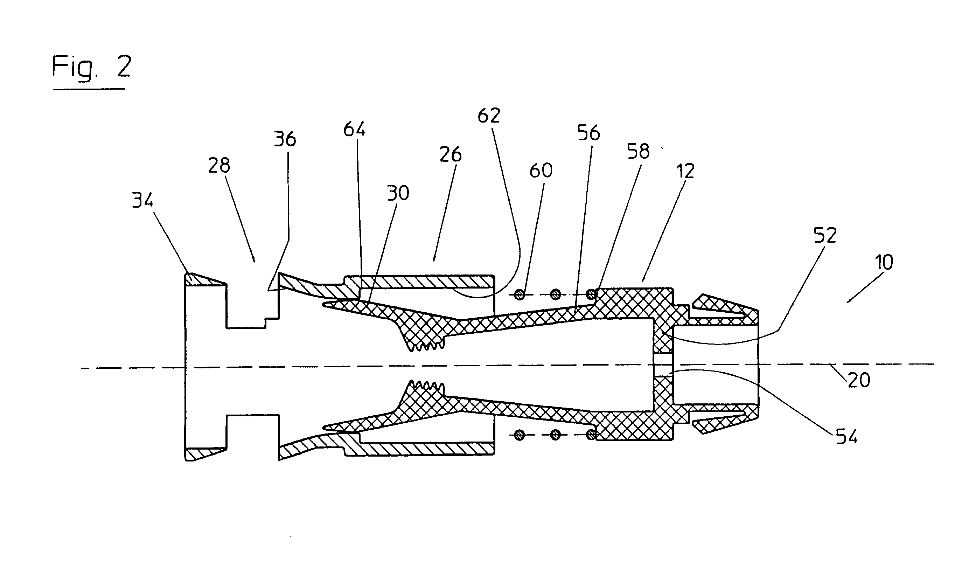

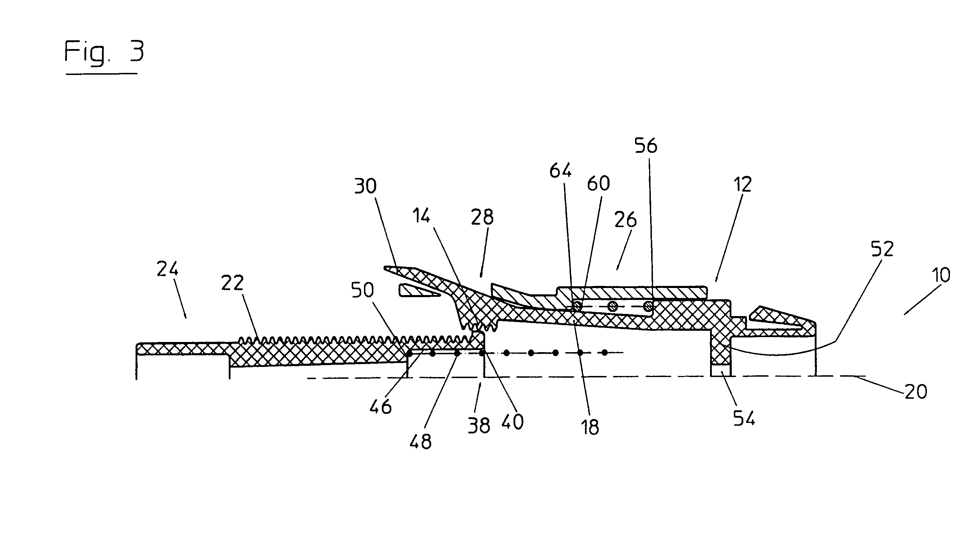

Einzelne Montageschritte der Vorrichtung 10 sind in den Figuren 2 und 3 dargestellt, wonach zunächst die Rastsegmenthülse 12 mit der außen angeordneten zweiten Druckfeder 60 in die Aufnahme 62 der Sicherungshülse 56 eingeführt wird, bis die Fortsätze 30 sich durch die Durchbrechungen 32 in der Seitenwand der Sicherungshülse 26 erstrecken. Nachdem die Sicherungshülse 26 in eine, in der Figur 3 äußerst rechts liegende Position überführt und die Arme 18 extrem weit gespreizt worden sind, kann die Rasthülse 24 zwischen den Rastsegmenten 14 hindurch in die Rastsegmenthülse 12 eingeführt werden, wobei bereits die erste Druckfeder 48 in der Aufnahme 46 eingebracht ist.

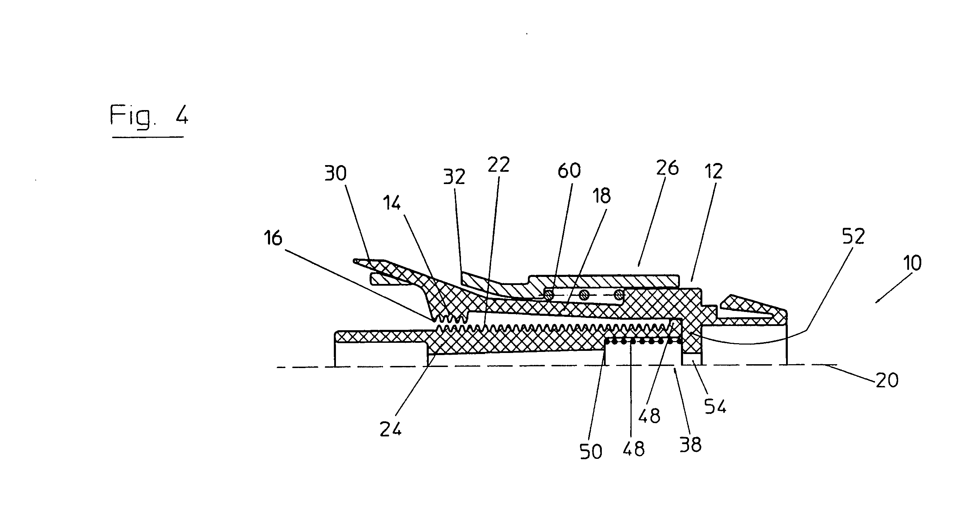

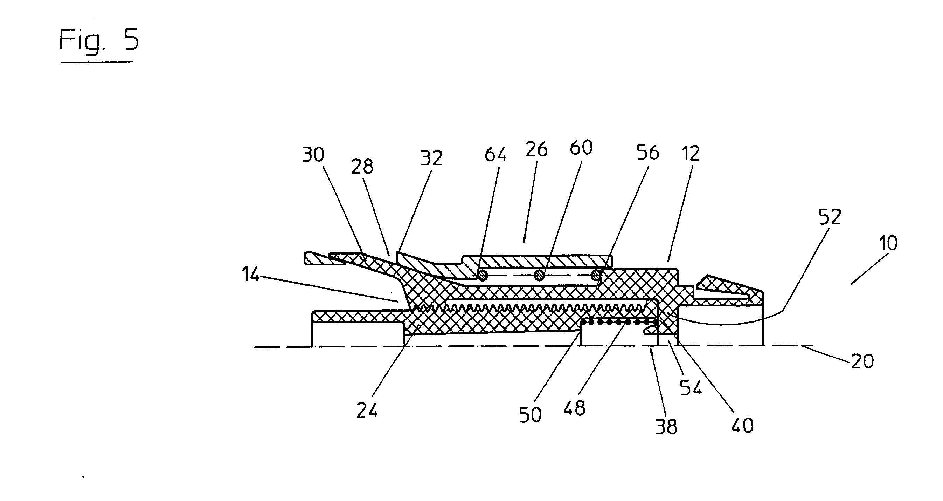

Nach dem Verbinden der Vorrichtung 10 mit dem Betätigungszug wird die Rasthülse 24 nach der Betätigung der Sicherungshülse 26 in die Entraststellung extrem weit, wie in Figur 4 dargestellt, in die Rastsegmenthülse 12 hineingedrückt und gemäß Figur 5 mittels der Sicherungshülse 26 fixiert. In diesem Zustand wird die Vorrichtung mitsamt des Betätigungszuges in dem Kraftfahrzeug o. dgl. eingebaut, wonach anschließend durch eine einmalige Überführung der Sicherungshülse 26 in die Entrastposition die Rasthülse 24 freigegeben wird und in axialer Richtung unter der Wirkung der Kraft der ersten Druckfeder 48 aus der Rastsegmenthülse 12 heraustreten kann, bis sämtliche Lose aus dem Gesamtsystem herausgenommen ist. In dieser Lage wird die Rasthülse 24 an der Rastsegmenthülse 12 mittels der Sicherungshülse 26 verrastet.

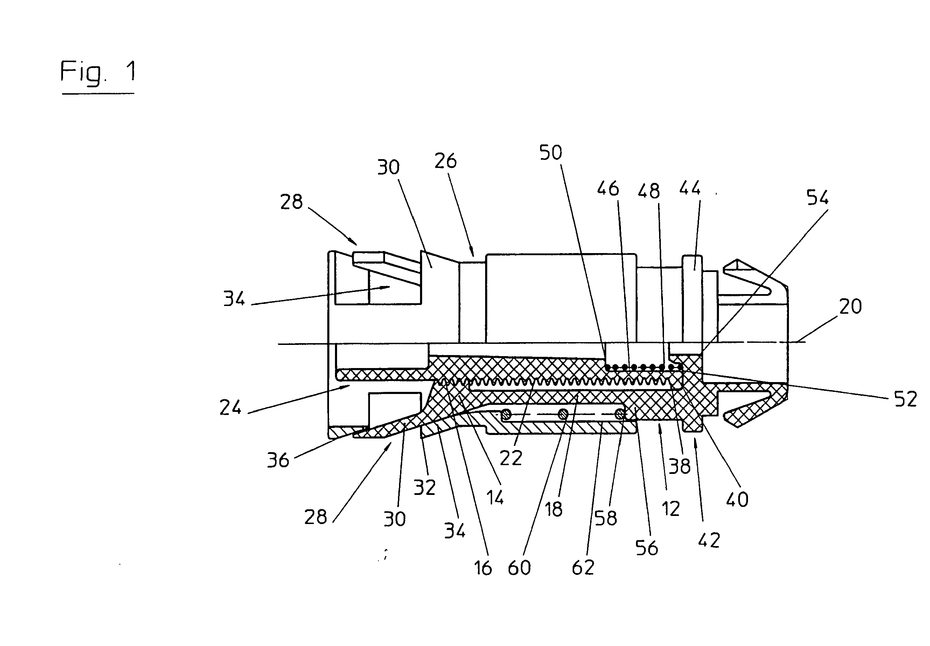

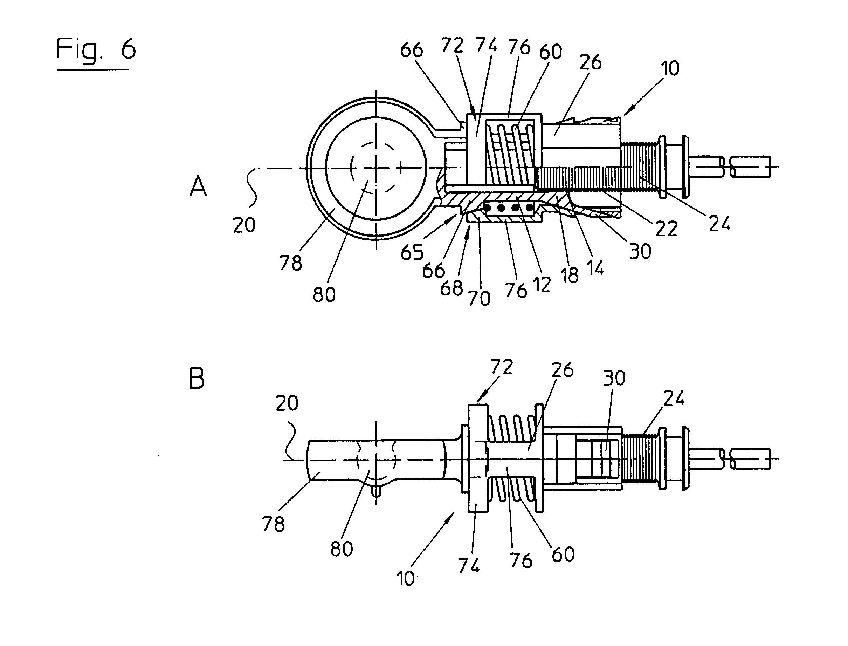

In Abwandlung der in den Figuren 1 bis 5 beschriebenen Ausführungsform bietet es sich an, die Sicherungshülse 26 in der Entrastposition lösbar an der Vorrichtung 10 bzw. der Rastsegmenthülse 12 festzulegen oder zu verrasten. Hierzu sind gemäß Figur 6 Rast- und/oder Gegenrastmittel 65, 68 vorgesehen. Insbesondere weist die Rastsegmenthülse 12 ein oder mehrere Rastmittel 65, wie Nasen 66, Vorsprünge, Widerlager o. dgl. auf, an der oder denen sich die Sicherungshülse 26 in der Entrastposition abstützt. Hierzu besitzt die Sicherungshülse 26 mit den Rastmitteln 65 der Rastsegmenthülse 12 korrespondierende Gegenrastmittel 68, wie Nasen 70, Vorsprünge, Widerlager o. dgl. Die Rastmittel 65 und die Gegenrastmittel 68 hintergreifen einander, sofern die Sicherungshülse 26 in die Entrastposition überführt wird. Zum Lösen dieser Verrastung der Sicherungshülse 26 mit der Vorrichtung 10 bzw. der Rastsegmenthülse 12 sind die Gegenrastmittel 68 einer elastisch verformbaren Ringwand 12 der Sicherungshülse 26 angeformt. Insbesondere sind die Gegenrastmittel 68 Bestandteil eines Ringsteges 74, der mittels insbesondere zweier Längsstege 76 einstückig mit der Sicherungshülse verbunden ist. Zum Lösen der Verrastung von Sicherungshülse 26 und Rasthülse 12 wird der Ringsteg 74 durch Ausübung eines beidseitigen Druckes im Bereich zwischen den Längsstegen 76 in etwa elliptisch verformt, wobei die Gegenrastmittel 68 radial nach außen verschoben werden und außer Eingriff mit den Rastmittel 65 gelangen. Aufgrund der Wirkung der Kraft der Druckfeder 60 wird dann die Sicherungshülse 26 selbsttätig aus der Entrastposition in die Verrastposition überführt.

Im weiteren weist das Ausführungsbeispiel der Figur 6 im Unterschied zu den Ausführungsbeispielen der Figuren 1 bis 5 eine Rastsegmenthülse 12 auf, der einends eine Öse 78 oder O-förmiger Ansatz o. dgl. angeformt ist, der zur Aufnahme einer Kugelpfanne 80 dient. In diese Kugelpfanne 80 kann ein bspw. mit dem Seilzug verbundenes Gestänge o. dgl. eingesteckt oder eingehängt werden.

### Bezugszeichenliste

- 10 -: Vorrichtung
- 12 -: Rastsegmenthülse
- 14 -: Rastsegment
- 16 -: Innenverzahnung
- 18 -: Arm
- 20 -: Längsachse
- 22 -: Außenverzahnung
- 24 -: Rasthülse
- 26 -: Sicherungshülse
- 28 -: Führungsmittel
- 30 -: Fortsatz
- 32 -: Durchbrechung
- 34 -: Schräge
- 36 -: Neigung
- 38 -: Ende
- 40 -: Anschlag
- 42 -: Abschnitt
- 44 -: Anschlag
- 46 -: Aufnahme
- 48 -: erste Druckfeder
- 50 -: Ringabsatz
- 52 -: Boden
- 54 -: Durchbrechung
- 56 -: Ansatz
- 58 -: Ringstufe
- 60 -: zweite Druckfeder
- 62 -: Aufnahme
- 64 -: Ringstufe
- 65 -: Rastmittel
- 66 -: Nase
- 68 -: Gegenrastmittel
- 70 -: Nase
- 72 -: Ringwand
- 74 -: Ringsteg
- 76 -: Längssteg
- 78 -: Öse
- 80 -: Kugelpfanne

## Patentansprüche

1. Vorrichtung (10) zur Längenkorrektur oder -einstellung von Seilzügen, Betätigungszügen, mechanisch-flexiblen Fernbetätigungen o. dgl. mit einer Rastsegmenthülse (12), deren eine Verzahnung, insbesondere eine Innenverzahnung (16) aufweisendes Rastsegment (14) an einem flexiblen Arm (18) angeordnet ist, mit einer mittels des Rastsegments (14) in bzgl. einer Längsachse (20) der Vorrichtung (10) unterschiedlichen axialen Positionen verrastbaren, eine Gegenverzahnung, insbesondere eine Außenverzahnung (22) aufweisenden Rasthülse (24), und mit einer Sicherungshülse (26), die unter Wirkung einer zweiten Vorspannung in einer Verrastposition positionierbar ist, in welcher die Verzahnung (16) des Rastsegments (14) in Eingriff mit der Gegenverzahnung (22) der Rasthülse (24) steht, **dadurch gekennzeichnet, daß** das freie Ende des Arms (18) als Fortsatz (30) ausgebildet und an der Sicherungshülse (26) Führungsmittel (28) für den Fortsatz (30) angeordnet sind, der Fortsatz (30) spitzwinklig schräg nach außen geneigt ist und die Randabschnitte der Führungsmittel (28) der Sicherungshülse (26), insbesondere an der Innenwand und/oder Außenwand eine entsprechende angepaßte Schräge (34) oder Neigung (36) aufweisen, wobei eine Überführung der Sicherungshülse (26) aus der Verrastposition in eine Entrastposition in eine geführte Bewegung des Fortsatzes (30) und des Arms (18) umgesetzt wird und die Verzahnung (16) außer Eingriff mit der Gegenverzahnung (22) gelangt.

2. Vorrichtung nach Anspruch 1, **dadurch gekennzeichnet, daß** die Führungsmittel (28) als Durchbrechung (32) der Sicherungshülse (26) ausgebildet und der Fortsatz (30) in der Durchbrechung (32) geführt ist.

3. Vorrichtung nach einem der vorhergehenden Ansprüche, **dadurch gekennzeichnet, daß** eine axiale Verschiebung der Sicherungshülse (26) mittels der Führungsmittel (28) in eine radial ein- oder auswärts gerichtete Auslenkung des Arms (18) umgesetzt wird.

4. Vorrichtung nach einem der vorhergehenden Ansprüche, **dadurch gekennzeichnet, daß** die Rasthülse (24) an dem rückwärtigen Ende (38) einen radial nach außen weisenden Ringbund, Ringflansch o. dgl. Anschlag (40) aufweist.

5. Vorrichtung nach einem der vorhergehenden Ansprüche, **dadurch gekennzeichnet, daß** die Rastsegmenthülse (12) in einem rückwärtigen Abschnitt (42) einen äußeren Anschlag (44), wie einen Absatz, eine umlaufende Stufe, Ringwand o. dgl. aufweist.

6. Vorrichtung nach einem der Ansprüche 1 bis 5, **dadurch gekennzeichnet, daß** die Rastsegmenthülse (12) und die Rasthülse (24) unter der Wirkung einer beide Hülsen (12, 24) auseinandertreibenden ersten Vorspannung stehen.

7. Vorrichtung nach Anspruch 6, **dadurch gekennzeichnet, daß** die Rasthülse (24) an dem rückwärtigen Ende (38) eine Aufnahme (46) o. dgl. aufweist, in der eine erste Druckfeder (48) für die erste Vorspannung wenigstens teilweise aufgenommen ist, wobei die Aufnahme (38) einen Ringabsatz (50) o. dgl. Stufe besitzt, an dem die erste Druckfeder (48) sich einends abstützt.

8. Vorrichtung nach Anspruch 6 oder 7, **dadurch gekennzeichnet, daß** die Rastsegmenthülse (14) in dem rückwärtigen Abschnitt (42) einen Boden (52) mit einer i. w. zentrisch angeordneten Durchbrechung (54) besitzt, an dem sich die erste Druckfeder (48) anderenends abstützt.

9. Vorrichtung nach einem der vorhergehenden Ansprüche, **dadurch gekennzeichnet, daß** die Rastsegmenthülse (12) im Bereich des Ansatzes (56) des Arms (18) eine äußere Ringstufe (58) o. dgl. aufweist, an der sich eine zweite Druckfeder (60) für die zweite Vorspannung einends abstützt.

10. Vorrichtung nach einem der vorhergehenden Ansprüche, **dadurch gekennzeichnet, daß** die Sicherungshülse (26) im rückwärtigen Bereich eine topfförmige Aufnahme (62) mit einer inneren Ringstufe (64) o. dgl. aufweist, an der sich die zweite Druckfeder (60) anderenends abstützt.

11. Vorrichtung nach einem der vorhergehenden Ansprüche, **dadurch gekennzeichnet, daß** die Sicherungshülse (26) in der Entrastposition lösbar an der Vorrichtung (10) mittels Rast- und/oder Gegenrastmitteln (65, 68) festlegbar oder verrastbar ist.

12. Vorrichtung nach Anspruch 11, **dadurch gekennzeichnet, daß** die Rastsegmenthülse (12) ein oder mehrere Rastmittel (65), wie Nasen (66), Vorsprünge, Widerlager o. dgl. aufweist, an der oder denen sich die Sicherungshülse (26) in der Entrastposition abstützt.

13. Vorrichtung nach einem der Ansprüche 11 oder 12, **dadurch gekennzeichnet, daß** die Sicherungshülse (26) mit den Rastmitteln (65) der Rastsegmenthülse (12) korrespondierende Rastmittel (68), insbesondere Nasen (70) o. dgl., aufweist, wobei die Rastmittel (65) und die Gegenrastmittel (68) der in der Entrastposition positionierten Sicherungshülse (26) einander hintergreifen.

14. Vorrichtung nach einem der Ansprüche 11 bis 13, **dadurch gekennzeichnet, daß** die Gegenrastmittel (68) einer elastisch verformbaren Ringwand (72) der Sicherungshülse (26) angeformt sind.

15. Vorrichtung nach einem der Ansprüche 11 bis 14, **dadurch gekennzeichnet, daß** die Gegenrastmittel (68) Bestandteil eines Ringsteges (74) sind, der mittels, insbesondere zweier Längsstege (76) einstückig mit der Sicherungshülse (26) verbunden ist.

16. Vorrichtung nach einem der vorhergehenden Ansprüche, **dadurch gekennzeichnet, daß** der Rastsegmenthülse (12) einends eine Öse (78) o. dgl., insbesondere zur Aufnahme einer Kugelpfanne (80) angeformt ist.

17. Vorrichtung nach einem der vorhergehenden Ansprüche, **dadurch gekennzeichnet, daß** die Rastsegmenthülse (12) mehrere flexible Arme (18) mit einer Verzahnung aufweist, deren Fortsätze (30) in Führungsmitteln (28) der Sicherungshülse (26) geführt sind.

## Claims

1. Device (10) for correcting or adjusting the length of cable pulls, actuating pulls, mechanically flexible remote control systems or the like, having a latching-segment sleeve (12), of which the latching segment (14), which has a toothing arrangement, in particular an inner toothing arrangement (16), is arranged on a flexible arm (18), having a latching sleeve (24) which can be latched, by means of the latching segment (14), in different axial positions in relation to a longitudinal axis (20) of the device (10) and has a mating toothing arrangement, in particular an outer toothing arrangement (22), and having a securing sleeve (26) which can be positioned, under the action of a second prestressing means, in a latching position, in which the toothing arrangement (16) of the latching segment (14) engages with the mating toothing arrangement (22) of the latching sleeve (24), **characterized in that** the free end of the arm (18) is designed as a continuation (30), and guide means (28) for the continuation (30) are arranged on the securing sleeve (26), the continuation (30) is inclined obliquely upwards at an acute angle, and the peripheral portions of the guide means (28) of the securing sleeve (26), in particular on the inner wall and/or outer wall, have a corresponding, matching slope (34) or inclination (36), a transfer of the securing sleeve (26) from the latching position into an unlatched position being converted into a guided movement of the continuation (30) and of the arm (18) and the toothing arrangement (16) disengaging from the mating toothing arrangement (22).

2. Device according to Claim 1, **characterized in that** the guide means (28) is designed as a through-passage (32) of the securing sleeve (26), and the continuation (30) is guided in the through-passage (32).

3. Device according to one of the preceding claims, **characterized in that** an axial displacement of the securing sleeve (26) is converted, by the guide means (28), into a radially inwardly or outwardly directed deflection of the arm (18).

4. Device according to one of the preceding claims, **characterized in that** the latching sleeve (24), at the rear end (38), has a radially outwardly oriented annular collar, annular flange or similar stop (40).

5. Device according to one of the preceding claims, **characterized in that** the latching-segment sleeve (12), in a rear portion (42), has an outer stop (44) such as a shoulder, an encircling step, annular wall or the like.

6. Device according to one of the preceding claims, **characterized in that** the latching-segment sleeve (12) and the latching sleeve (24) are subjected to the action of a first prestressing means which drives the two sleeves (12, 24) apart from one another.

7. Device according to claim 6, **characterized in that** the latching sleeve (24), at the rear end (38), has a mount (46) or the like in which a first compression spring (48) for the first prestressing means is accommodated at least in part, the mount (38) having an annular shoulder (50) or similar step on which the first compression spring (48) is supported at one end.

8. Device according to claim 6 or 8, **characterized in that** the latching-segment sleeve (12), in the rear portion (42), has a base (52) with an essentially centrally arranged through-passage (54), on which the first compression spring (48) is supported at the other end.

9. Device according to one of the preceding claims, **characterized in that** the latching-segment sleeve (12), in the region of the extension (56) of the arm (18), has an outer annular step (58) or the like, on which a second compression spring (60) for the second prestressing means is supported at one end.

10. Device according to one of the preceding claims, **characterized in that** the securing sleeve (26), in the rear region, has a cup-like mount (62) with an inner annular step (64) or the like, on which the second compression spring (60) is supported at the other end.

11. Device according to one of the preceding claims, **characterized in that** the securing sleeve (26), in the unlatched position, can be secured or latched in a releasable manner on the device (10) by means of latching and/or mating latching means (65, 68).

12. Device according to Claim 11, **characterized in that** the latching-segment sleeve (12) has one or more latching means (65), such as noses (66), protrusions, abutments or the like, on which the securing sleeve (26) is supported in the unlatched position.

13. Device according to either of Claims 11 and 12, **characterized in that** the securing sleeve (26) has latching means (68), in particular noses (70) or the like, which correspond with the latching means (65) of the latching-segment sleeve (12), the latching means (65) and the mating latching means (68) of the securing sleeve (26) positioned in the unlatched position engaging one behind the other.

14. Device according to one of Claims 11 to 13, **characterized in that** the mating latching means (68) are integrally formed on an elastically deformable annular wall (72) of the securing sleeve (26).

15. Device according to one of Claims 11 to 14, **characterized in that** the mating latching means (68) are a constituent part of an annular crosspiece (74) which is connected integrally to the securing sleeve (26) by means of in particular two longitudinal crosspieces (76).

16. Device according to one of the preceding claims, **characterized in that** the latching-segment sleeve (12) has integrally formed on it, at one end, an eyelet (78) or the like, in particular for accommodating a ball socket (80).

17. Device according to one of the preceding claims,
**characterized in that** the latching-segment sleeve (12) has a plurality of flexible arms (18) with a toothing arrangement, of which the continuations (30) are guided in guide means (28) of the securing sleeve (26).

## Revendications

1. Dispositif (10) destiné à corriger ou à régler des longueurs de câbles, de fils d'actionnement, de commandes à distance flexibles sur le plan mécanique ou similaires, avec un manchon (12) à segment d'encliquetage dont le segment encliquetage (14) présentant une denture, en particulier une denture intérieure (16) est disposé sur un bras flexible (18), avec un manchon d'encliquetage (24) présentant une denture opposée, en particulier une denture extérieure (22), encliquetable au moyen du segment d'encliquetage (14) dans différentes positions axiales par rapport à un axe longitudinal (20) du dispositif (10), et avec un manchon de sécurité (26) qui sous l'effet d'une deuxième précontrainte est positionnable dans une position d'encliquetage dans laquelle la denture (16) du segment d'encliquetage (14) s'engrène avec la denture opposée (22) du manchon d'encliquetage (24), **caractérisé en ce que** l'extrémité libre du bras (18) est conformée en tant que prolongement (30) et des moyens de guidage (28) pour le prolongement (30) sont disposés sur le manchon de sécurité (26), le prolongement (30) est incliné obliquement sous un angle aigu vers l'extérieur et les parties de bord des moyens de guidage (28) du manchon de sécurité (26) présentent en particulier sur la paroi intérieure et/ou sur la paroi extérieure une obliquité (34) ou inclinaison (36) adaptée de façon correspondante, un transfert du manchon de sécurité (26) de la position d'encliquetage dans une position de désencliquetage étant transformé en un mouvement guidé du prolongement (30) et du bras (18), et la denture (16) parvenant à se désengrener de la denture opposée (22).

2. Dispositif selon la revendication 1, **caractérisé en ce que** les moyens de guidage (28) sont conformés comme percement (32) du manchon de sécurité (26) et le prolongement (30) est guidé dans le percement (32).

3. Dispositif selon l'une quelconque des revendications précédentes, **caractérisé en ce qu'**un déplacement axial du manchon de sécurité (26) est transformé au moyen des moyens de guidage (28) en une déviation du bras (18) orientée radialement vers l'intérieur ou l'extérieur.

4. Dispositif selon l'une quelconque des revendications précédentes, **caractérisé en ce que** le manchon d'encliquetage (24) présente sur l'extrémité arrière (38) un talon annulaire, un épaulement annulaire ou une butée similaire (40) indiquant radialement l'extérieur.

5. Dispositif selon l'une quelconque des revendications précédentes, **caractérisé en ce que** le manchon (12) à segment d'encliquetage présente dans une partie arrière (42) une butée extérieure (44), telle qu'un épaulement, un gradin circonférentiel, une paroi annulaire ou similaire.

6. Dispositif selon l'une quelconque des revendications précédentes, **caractérisé en ce que** le manchon (12) à segment d'encliquetage et le manchon d'encliquetage (24) se trouvent sous l'effet d'une première précontrainte séparant les deux manchons (12,24) l'un de l'autre.

7. Dispositif selon la revendication 6, **caractérisé en ce que** le manchon d'encliquetage (24) présente sur son extrémité arrière (38) un logement (46) ou similaire dans lequel un premier ressort de compression (48) destiné à la première précontrainte est au moins partiellement reçu, le logement (38) comportant un épaulement annulaire (50) ou un gradin similaire sur lequel s'appuie le premier ressort de compression (48) par l'une de ses extrémités.

8. Dispositif selon la revendication 6 ou 7, **caractérisé en ce que** le manchon (12) à segment d'encliquetage comporte dans la partie arrière (42) un fond (52) présentant un percement (54) disposé essentiellement au centre, fond sur lequel s'appuie le premier ressort de compression (48) par son autre extrémité.

9. Dispositif selon l'une quelconque des revendications précédentes, **caractérisé en ce que** le manchon (12) à segment d'encliquetage présente dans la zone de l'épaulement (56) du bras (18) un épaulement annulaire extérieur (58) ou similaire sur lequel s'appuie un deuxième ressort de compression (60) destiné à la deuxième précontrainte par l'une de ses extrémités.

10. Dispositif selon l'une quelconque des revendications précédentes, **caractérisé en ce que** le manchon de sécurité (26) présente dans la zone arrière un logement en forme de pot (62) avec un épaulement intérieur (64) ou similaire sur lequel s'appuie le deuxième ressort de compression (60) par son autre extrémité.

11. Dispositif selon l'une quelconque des revendications précédentes, **caractérisé en ce que** le manchon de sécurité (26) en position de désencliquetage est fixable ou encliquetable de façon amovible sur le dispositif (10) au moyen de moyens d'encliquetage et/ou de moyens opposés d'encliquetage (65,68).

12. Dispositif selon la revendication 11, **caractérisé en ce que** le manchon (12) à segment d'encliquetage présente un ou plusieurs moyens d'encliquetage (65) tels que des ergots (66), saillies, culées ou similaires sur lesquel(le)s le manchon de sécurité (26) s'appuie en position de désencliquetage.

13. Dispositif selon l'une quelconque des revendications 11 ou 12, **caractérisé en ce que** le manchon de sécurité (26) présente des moyens d'encliquetage (68), en particulier des ergots (70) ou similaires, correspondant avec les moyens d'encliquetage (65) du manchon (12) à segment d'encliquetage, les moyens d'encliquetage (65) et les moyens opposés d'encliquetage (68) du manchon de sécurité (26) positionné en position de désencliquetage sont engagés les uns derrière les autres.

14. Dispositif selon l'une quelconque des revendications 11 à 13, **caractérisé en ce que** les moyens opposés d'encliquetage (68) d'une paroi annulaire déformable élastiquement (72) sont façonnés sur le manchon de sécurité (26).

15. Dispositif selon l'une quelconque des revendications 11 à 14, **caractérisé en ce que** les moyens opposés d'encliquetage (68) font partie d'une âme annulaire (74) qui est raccordée d'une seule pièce au moyen en particulier de deux âmes longitudinales (76) au manchon de sécurité (26).

16. Dispositif selon l'une quelconque des revendications précédentes, **caractérisé en ce qu'**un oeillet (78) ou similaire, en particulier pour recevoir un logement de rotule (80) est façonné sur une extrémité du manchon (12) à segment d'encliquetage.

17. Dispositif selon l'une quelconque des revendications précédentes, **caractérisé en ce que** le manchon (12) à segment d'encliquetage présente plusieurs bras flexibles (18) comportant une denture, dont les prolongements (30) sont guidés dans des moyens de guidage (28) du manchon de sécurité (26).
